# EUROPEAN PATENT SPECIFICATION

(11) **EP 1 750 351 B1**
(45) Date of publication and mention of the grant of the patent: **04.12.2019**
(21) Application number: 04735339.6
(22) Date of filing: 28.05.2004
(51) Int. Cl.: H02K 3/28, H02K 3/12, H02K 3/34, H02K 3/38, H02K 3/44

(54) **ALTERNATOR FOR VEHICLE**
LICHTMASCHINE FÜR FAHRZEUG
ALTERNATEUR POUR VÉHICULE

(43) Date of publication of application: 07.02.2007
(73) Proprietor: MITSUBISHI DENKI KABUSHIKI KAISHA, Chiyoda-ku, Tokyo 100-8310 (JP)
(72) Inventor: KASHIHARA, Toshiaki, Tokyo 1008310 (JP); TANAKA, Kazunori, Tokyo 1008310 (JP); TAMURA, Shuichi, Tokyo 1008310 (JP); OHNISHI, Yukiyoshi, Tokyo 1008310 (JP); OHTA, Yoshikazu, Tokyo 1008310 (JP)
(74) Representative: Hoffmann Eitle
(86) International application number: PCT/JP2004/007757
(87) International publication number: WO 2005/117237

(56) References cited:
- EP-A2- 1 294 076
- JP-A- 4 244 752
- JP-A- 11 164 500
- JP-A- 2000 164 043
- JP-A- 2000 228 853
- JP-A- 2002 125 338
- JP-A- 2003 259 584
- US-A1- 2002 043 886
- US-A1- 2003 015 932
- Enzo Toretello: "SC A1 Cigrè A1-06 "Large motors and drives" Final Report on Questionnaire "Experience in Vacuum Pressure Impregnated machines to-date"", , 17 May 2004 (2004-05-17), XP055439250, Retrieved from the Internet: URL:http://a1.cigre.org/content/download/1 0582/329511/version/1/file/VPIFINALEID45VE R39.doc [retrieved on 2018-01-09]
- D F Warne: "Newnes Electrical Engineers's Handbook" In: "Newnes Electrical Engineers's Handbook", 1 October 2000 (2000-10-01), Reed Elsevier plc group, XP055565190, ISBN: 978-0-7506-4879-0 pages 241-244,
- Ron Hodkinson ET AL: "Lightweight electric/hybrid vehicle design" In: "Lightweight electric/hybrid vehicle design", 1 January 2001 (2001-01-01), Elsevier Science & Technology, XP055565201, ISBN: 978-0-7506-5092-2 page 60,
- K C Agrawal: "Industrial Power Engineering and Applications Handbook", , 8 October 2001 (2001-10-08), pages 219-229, XP055565204, ISBN: 978-0-7506-7351-8 Retrieved from the Internet: URL:https://www.sciencedirect.com/book/978 0750673518/industrial-power-engineering-an d-applications-handbook [retrieved on 2019-03-06]

## Description

### Technical Field

The present invention relates to an ac generator driven by, for example, an internal combustion engine, in particular, to a stator construction of the ac generator loaded in a vehicle such as a passenger car, a truck or the like.

### Background of the Invention

In an ac generator for a vehicle, requirement for downsizing and high-powering, or for an enhanced insulation performance and an electrolytic corrosion tolerance have been recently increasing, and a variety of improved approaches to fulfill those requirements have been proposed.

With respect to an improvement of a power generation capacity, as described in JP H11-164505, an improved construction in which each of the electrical conductors is separately disposed in space one another and a thickness in insulating layers in a cross-over portion of electric conductors is set smaller than that in a slot-in portion located in slots, has been proposed in order to improve cooling capabilities in the cross-over portion of the conductors and obtain higher output and efficiency of the generator.

In the conventional stator, generally, it was well known that electric conductors coated with insulator films have been widely used, and the insulator films cause thermal dissipation of the conductors to seriously suppress to low levels. However, it is practically impossible for the insulator films to be removed or made smaller in thickness because the insulation capability of the conductors will be unallowably weakened.

US 2002/043886 A1 is related to the preamble of claim 1. Similar features are also shown in the documents EP 1 294 076 A2 and US 2003/015932 A1.

### Object of the Invention

The present invention has been made in order to solve the above-described problem, and it is an object thereof to obtain an ac generator for a vehicle which can ensure insulation capability between coils and can achieve downsizing and high-powering or improvement in the insulating capacity and electrolytic corrosion resistibility without a necessity of separately disposing each conductor in space.

The present invention is defined in claim 1. Enabling disclosure for the invention is found in the following description in embodiments 2 and 3. Embodiments 1, 4 and 5 are to be understood as comparative examples.

In particular, an ac generator for a vehicle is provided with a rotor having field windings, a stator including a stator core placed facing to the rotor and an electrical conductor wound on the stator core, and a housing supporting the rotor and the stator, wherein the stator core is constituted by a laminated core having a plurality of slots each extending to an axial direction, the electrical conductor is comprised of a slot-in portions located in the slots and a cross-over portion connecting the slot-in portions each other at the shaft end side of the stator core, wherein the shape of conductors in the slot-in portions located in the slots is substantially rectangular in its cross section and the shape of conductors in the cross-over portion is substantially circular in its cross section, and at least a longer side out of the conductors in the slot-in portions located in the slots is smaller in thickness of their insulation layers than that of insulation layers in the cross-over portions.

According to the present invention, as an ac generator for a vehicle is constituted so that the shape of conductors in the slot-in portions located in the slot is substantially rectangular in its cross section and the thickness in insulation layers of that portions is smaller than the other portion, there are advantages that heating from the conductors can be efficiently conducted to the laminated core and the housing.

On the contrary, the thickness in insulating layers of the cross-over portions is larger than the other, insulation capability among the coils is assured and the axial height of the cross-over portion can be lowered to prevent conductors of the cross-over portion from water immersion, improving electrolytic corrosion resistibility without disposing unnecessary space among coils.

### Brief Description of the Drawings

Fig. 1 is a cross-sectional view showing a construction of an ac generator for a vehicle according to a first embodiment
Fig. 2 is a perspective view showing a stator of an ac generator for a vehicle according to a first embodiment.
Fig. 3 is a fragmentary cross-sectional view showing a state in which a stator winding is installed in a slot of a stator of an ac generator for a vehicle according to a first embodiment.
Fig. 4 is a perspective view showing one phase of winding of a stator of the ac generator for a vehicle according to a first embodiment.
Fig. 5 is an enlarged view showing an essential portion of a stator winding of the ac generator for a vehicle according to a first embodiment.
Fig. 6 is a fragmentary cross-sectional view showing a state in which a stator winding is installed in a slot of a stator of an ac generator for a vehicle according to a second embodiment of the invention.
Fig. 7 is a fragmentary cross-sectional view showing a state in which a stator winding is installed in a slot of a stator of an ac generator for a vehicle according to a third embodiment of the invention.
Fig. 8 is a front view of a front bracket of an ac generator for a vehicle according to a fourth embodiment.
Fig. 9 is a perspective view showing an external configuration of a rotor according to a fourth embodiment.
Fig. 10 is a cross-sectional view showing a process for manufacturing a stator of an ac generator for a vehicle according to a fifth embodiment.

### Embodiment 1.

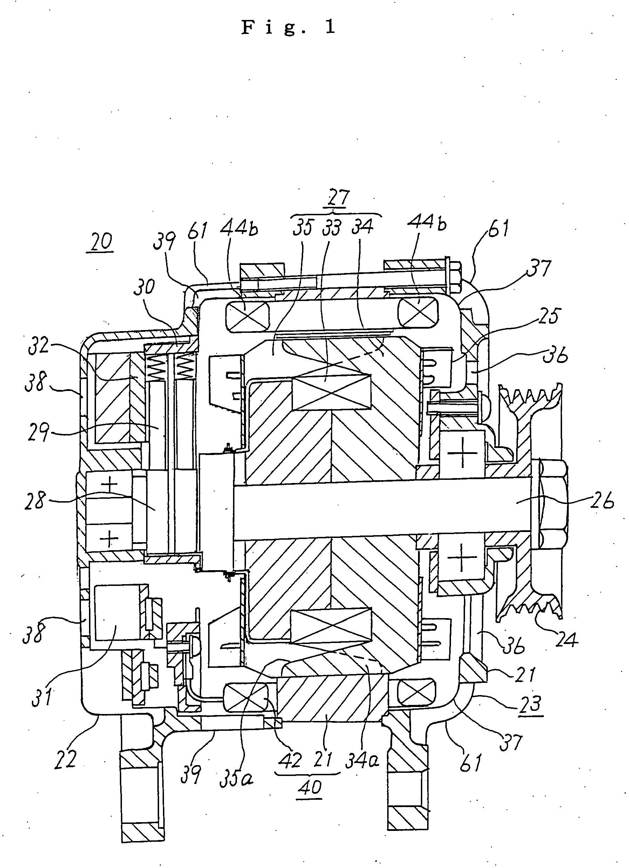

An ac generator for a vehicle of a first embodiment will be described referring to Fig. 1. As shown in Fig. 1, the ac generator for a vehicle 20 is provided with a housing 23 comprising of a front bracket 21 and a rear bracket 22 each of which is constructed in a bowl-shape and made of aluminum of good heat conductance, a shaft 26 installed in the housing 23 and on one end of which a pulley 24 is fixed, a Randell type rotor 27 secured on the shaft 26, a fan 25 secured on both ends of the axis of the rotor 27, a stator 40 fixed on the housing 23 so as to surround the rotor 27, a slip-ring 28 fixed on the other end of the shaft 26 to serve a current to the rotor 27, a pair of brushes 29 sliding over the surface of the slip-ring 28, a brush holder 30 for storing the brushes 29, a rectifier 31 electrically connected to the stator 40 for rectifying an alternative current generated by the stator 40 into a direct current, and a regulator 32 fixedly inserted to the bush holder 30 for regulating a magnitude of the ac voltage generated by the stator 40. The rotor 27 is provided with a field winding 33 through which the current flows to generate magnetic flux and a pair of pole cores 34, 35 provided so as to surround the field winding 33 to form a pole by its magnetic flux. The pair of pole cores 34, 35 is made of iron and is provided with claw-type poles 34a, 35a each of which has substantially a trapezoidal shape in the most external configuration thereof and is protruded from the edge of its periphery on circumferentially equiangular pitch. The pair of pole cores 34, 35 is fixed in opposed position on the shaft 26 so that each of the claw-type poles 34a, 35a is geared each other. The stator 40 is constituted with a cylindrical stator core 41 formed by laminated magnetic steel plates and a stator winding 42 wound on the stator core 41, and is firmly sandwiched between the front bracket 21 and the rear bracket 22 so as to form an uniform air gap between the outer peripheral surface of the claw-type poles 34a, 35a and the inner peripheral surface of the stator core 41. The front bracket 21 has an air charging hole 36 and an air discharging hole 37 and the rear bracket 22' also has an air charging hole 38 and an air discharging hole 39.

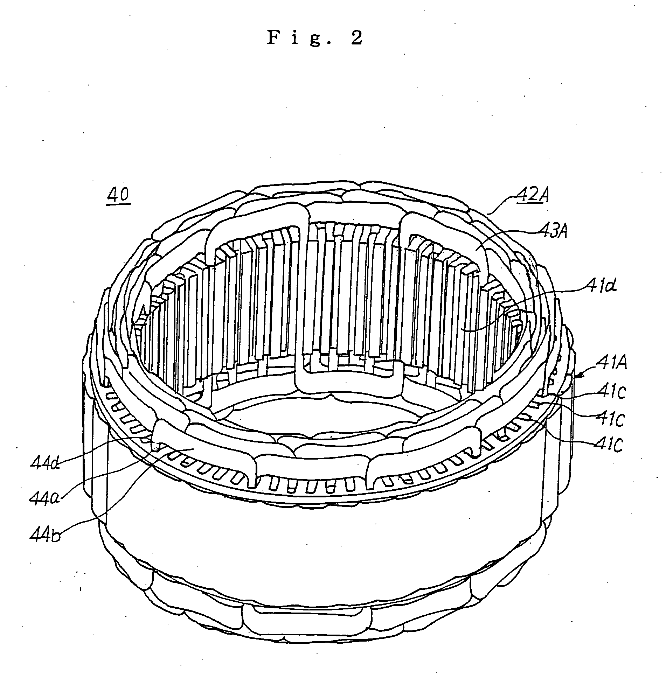

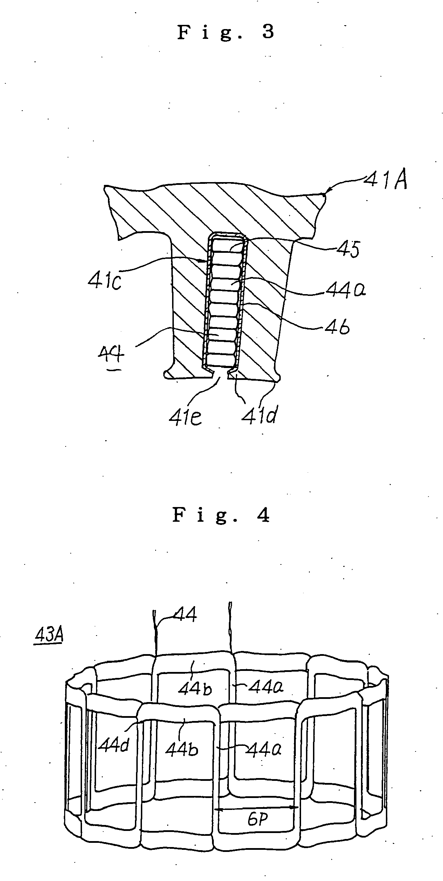

Fig. 2 is a perspective view showing a stator of the ac generator for a vehicle. Fig. 3 is a fragmentary cross-sectional view showing a state in which a stator winding is installed in a slot of a stator of the ac generator for a vehicle.

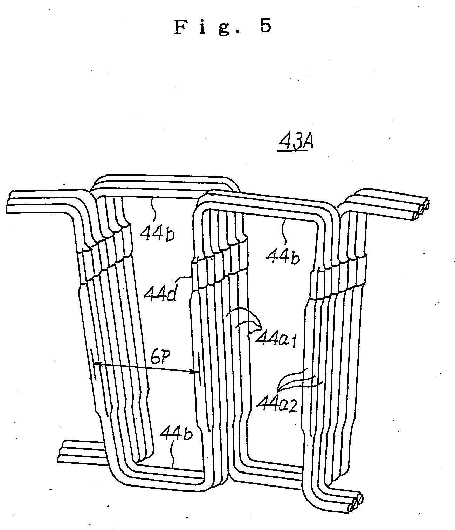

Fig. 4 is a perspective view showing one phase of winding of a stator of the ac generator for a vehicle. Fig. 5 is an enlarged view showing an essential portion of one phase of winding of a stator windings of the ac generator for a vehicle.

In Fig. 2, a stator core 41A is manufactured in a way that the magnetic steel plates pressed in a predetermined shape respectively are integrally laminated to form a cylindrical body, and slots 41c are formed on the stator core 41A on circumferentially substantially equiangular pitch at the rate of 2 per every pole and every phase. In other word, 72 slots are provided on the stator core 41A so that the stator winding 42A comprising two 3 phase ac windings with respect to twelve claw-poles of the rotor 27 is procured. On the other hand, the stator winding 42A is comprised of 6 phase of windings 43Amounted on the stator core 41A by shifting slots 41c to be mounted one by one, and two 3 phase ac windings is formed by connecting each of 3 phase divided windings 43A to ac-connection, for example, Y-connection. Each winding 43A, as shown in Fig. 4, is constructed from a full-pitch winding in which each slot has the same number of conductors by winding five turns in wave-like a conductor 44 consisting of insulating coated copper wire every 6 slots of the slots 41c toward one circumferential direction, successively, five turns in wave-like every 6 slots of the slots 41c toward the other circumferential direction. The conductor 44 is provided with a slot-in portion 44a and a cross-over portion 44b. Each slot-in portion 44a of the conductors 44 installed in the slot 41c is formed substantially in a rectangular shape in the cross section as shown in Fig. 3, and the thickness of the insulating coating 45 coated in a longer side of its rectangular shape is smaller than that of the cross-over portion (coil end portion) 44b. Moreover, the cross-over portion (coil end portion) 44b which connects the slot-in portion 44a at the shaft end portion of the stator core 41A is formed substantially in a circular shape in the cross section, and the thickness of the insulating coating of the cross-over portion 44b is larger than that of at least the longer side of the slot-in portion 44a. The slot-in portion 44a of the conductor 44 is installed in each slot 41c through an insulating paper 46 in a way that the longer side of its substantially rectangular shape in the cross section is disposed facing to a circumferential direction and each slot-in portion 44a is tightly stacked by 10 layers on a line to the radial direction.
Where the slot-in portion 44a is constructed so that the longer side of a substantially rectangular shape in the cross section is larger in length than a gap 41e (slot opening) between collars 41d to prevent the conductor 44 from dropping out of the slot.

Fig. 5 is an enlarged view of a main portion of one phase of a stator winding and shows an example in which 6 divided windings 43A are arranged in a line. That is, three slot-in portions 44a1 out of the conductors 44 formed in wave-form are installed in a deep portion of slots of the stator core 41A located every 6 pitches away toward one circumferential direction, successively, the other three slot-in portions 44a2 formed in wave-form are installed in a shallow portion of the slots located every 6 pitches away toward the other circumferential direction.

A slot opening-pass portion 44d following the slot-in portions 44a is formed in flattened shape in cross section and a longitudinal axis thereof is in a direction perpendicular to the longer side of a substantially rectangular shape in cross section and a length of a short axis thereof is smaller than the gap 41e between the collars 41d (see Fig. 5).

According to the aforementioned embodiment, since the slot-in portions 44a of the conductor 44 are accumulated in slots 41c in the radial direction without any air space, it is possible to raise densities of electrical conductors in the slot-in portion and conductivities of heat from electrical conductors to the laminated core or the housing. In order to realize such a conductor rod, an insulation coating conductor with round shape in cross section is molded to substantially rectangular shape in cross section by a mill roll and the like before it is entered in slots 41c. For example, when the insulating coating conductor with round shape in cross section of 1.6 mm in diameter is rolled by the mill roll into one direction to 1.3 mm thickness flattened, the insulating coating on a surface rolled, that is a flattened insulating coating is extended thinly, but the insulating coating on a surface not rolled, that is a circular curved insulating coating keeps unchanged in the thickness, causing the flattened insulating coating to be thinner than the circular curved insulating coating. For example, in the case of the insulating coating conductor with round shape in cross section of approximately 50 *µ*m in the thickness of enamel system insulating coating, it is possible to obtain a running track-like conductor in cross section having an approximately 50 *µ*m thick of circular curved insulating coating and 40 *µ*m thick of flattened insulating coating. Namely, as the thickness of the insulating coating becomes thin in the radial direction, the amount of heat generated by armature windings is effectively dissipated to the periphery of the laminated core positioned in the radial direction and promotion of output power and efficiency of the generator are achieved by synergistic effect of improvement in lamination factor in slots and heat conductivity.

In addition, according to this embodiment, as shown in Fig. 1, a housing 23 is provided on the periphery of the armature core to protect the cross-over portion (coil end portion) 44b, and the housing has exhaust holes 37, 39 for discharging a cooling blast near the cross-over portion (coil end portion)44b.

Therefore, because thickness of insulating coating in the cross-over portion 44b remains unchanged, that is, can maintain enough thickness, it is possible to obtain an excellent isolation between coils without providing unnecessary air space between coils, and, because the axial height of the cross-over portion 44b can be lowered, it is also possible to shorten the length of the electrical conductors, resulting in improvement of the output power and efficiency of generator and promoting downsizing. While the vehicle is moving, furthermore, saltwater or muddy water could submerge through the exhaust holes 37, 39, however since thickness of insulating coating in the cross-over portion 44b is kept in thick according to this embodiment, it is possible to protect the electrical conductors from immersing and to prevent electric corrosion between each of 3 phases or between coils and the housing.

### Embodiment 2.

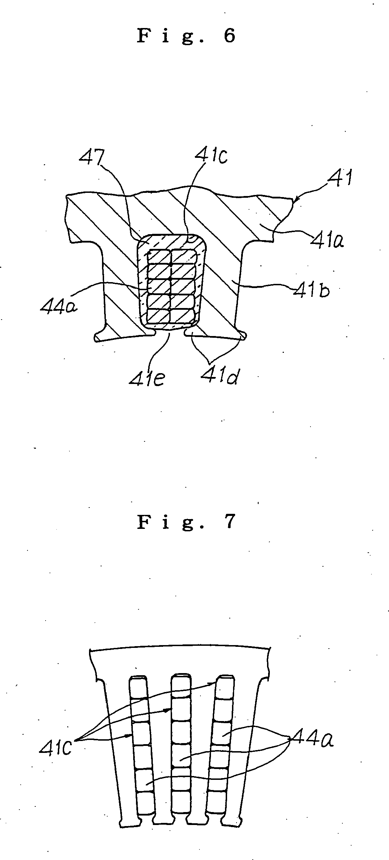

According to the second preferred embodiment, as shown in Fig. 6, before the slot-in portions 44a of the winding unit is installed in the slot 41c, the slot-in portions 44a of the conductor 44 is molded to substantially rectangular shape in cross section having a shorter side thereof in the radial direction and a longer side thereof in the circumferential direction of the generator, and are drawn up circumferentially in two lines closely each other. In Fig. 6, reference numeral 47 represents insulating resins impregnated to mold the winding unit.
The above mentioned construction enables the slot-in portions 44a of the conductor 44 to be installed in the slot 41c with no space each other circumferentially.
According to the second embodiment, therefore, as the electrical conductors are closely laminated in the radial direction at the longer side of the rectangular rod at which the insulating coating is kept thin in the circumferential direction, it is also possible to improve densities of the electrical conductors in slots 41c and conductivities of heat generated by the electrical conductors to the laminated core or the housing, resulting in further enhancement of the output power and efficiency of the generator.

### Embodiment 3.

According to the third preferred embodiment, as shown in Fig. 7, before the slot-in portions 44a of the winding unit is installed in the slot 41c, the slot-in portions 44a of the conductor 44 is molded to substantially rectangular shape in cross section having a longer side thereof in the radial direction of the generator and a shorter side thereof in the circumferential direction, and are drawn up in the radial direction in one lines closely each other.

The above mentioned construction enables the slot-in portions 44a of the conductor 44 to be installed in the slot 41c with no space each other circumferentially.

According to the third embodiment, therefore, as a heat conductive surface between the longer side of the rectangular rod at which insulating coating is kept thin in the radial direction and the dents of teeth of the laminated core are kept widely, it is also possible to effectively dissipate heat generated by armature windings to the periphery the laminated core through the dents of teeth of the laminated core, resulting in further enhancement of the output power and efficiency of the generator. By interposing an insulating member between the thin portion of the insulating coating and the dents of teeth of the laminated core, it is possible to improve insulating strength between electrical conductors and cores.
Further, when an insulating resin is impregnated in the electrical conductors located in the slot 41c, it is also possible to effectively dissipate heat generated by armature windings to the periphery of the laminated core in the radial direction, resulting in improvement of insulating strength between electrical conductors and cores.

### Embodiment 4.

The fourth preferred embodiment describes an example in which a rotor 27 is provided with a plurality of discharging hole ribs and discharging air holes on the periphery of the bracket, and a plurality of fan blades on the fans provided on the rotor 27.

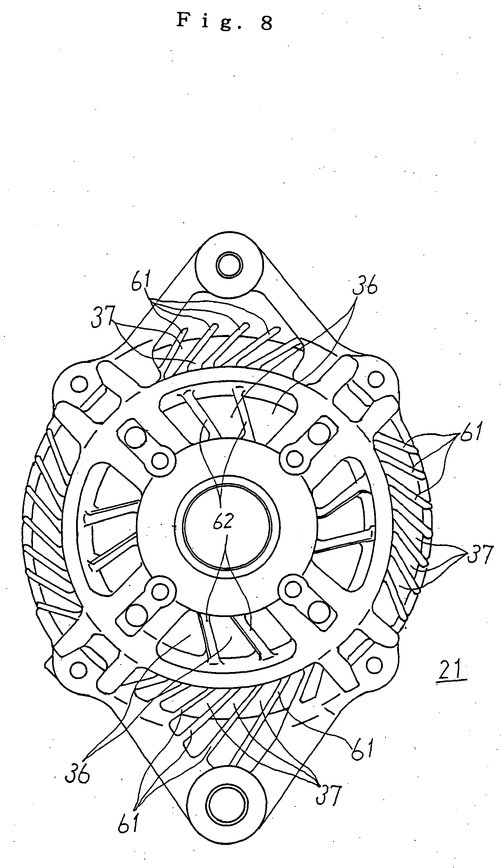

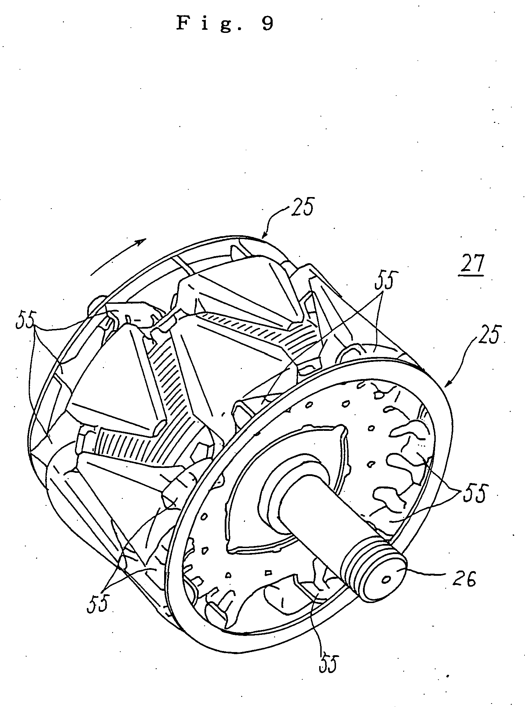

Fig. 8 is a front view of a front bracket of an ac generator for a vehicle and Fig. 9 is a perspective view showing an external configuration of a rotor. In Fig. 8, a plurality of discharging hole ribs 61 are provided on the periphery of the front bracket 21, and a plurality of discharging air holes 37 are formed between the discharging ribs 61. On the shaft side of the front bracket 21, there are provided with a plurality of the charging hole ribs 62 and charging air holes 36 formed between the charging hole ribs 62.

Referring to Fig. 1 and Fig. 8, a flow of cooling air is next explained. The cooling air drawn in longitudinally from the charging air holes 36 of the front bracket 21 is bent centrifugally after passing through between the charging hole ribs 62 and is exhausted to the outside through the discharging air holes 37 between the discharging hole ribs 61 after cooling a front end portion of the stator winding 42. The centrifugal fan 25 is provided with a plurality of fan blades 55 as shown in Fig. 9, the air flowing in the centrifugal fan 25 is bent at right angle to be exhausted in the radial direction, operating as a cooling fan for radiating heat transferred from the stator 40 to the front bracket 21 and the rear bracket 22.
This accelerates radiation of the heat coils and results in further enhancement of the output power and efficiency of the generator.
The above was explained on the side of the front bracket 21, but the same ventilation is applied on the side of the rear bracket 22 as well, that is, by the operation of the fan blades 55 provided on the rear bracket 22, the cooling air drawn in longitudinally from the charging air holes 36 is bent centrifugally after passing through between the charging hole ribs 62 and is exhausted to the outside through the discharging air holes 39 between the discharging ribs 61 after cooling a rear end portion of the stator winding 42.

### Embodiment 5.

The fifth preferred embodiment describes an effective method for disposing the slot-in portion 44a of the electrical conductors in the slots 41c. The method known by, for example, Japanese Patent No.3,400,776 (Patent document 2)in which a manufacturing process for an ac generator for a vehicle is described is used for storing the winding unit molded in substantially rectangular shape in cross section into the slots 41c in this invention closely without any air gap.

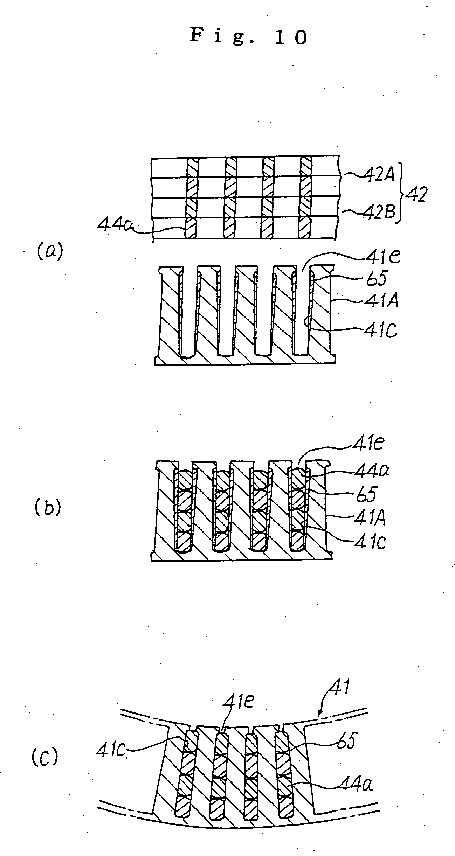

Fig.10 is a cross-sectional view showing a process for manufacturing a stator of an ac generator for a vehicle.
First of all, a rectangular solid core is prepared by laminating a plurality of cold-rolled steel plates (SPCC material) in which trapezoidal slots are formed at the given pitch (30° in electric angle) and by laser welding the periphery of the core. After that preparation, as shown in Fig. 10(a), an insulator 65 is attached inside slots 41c of the core 36, and then straight portions of two stator windings 42A, 42B are forcibly inserted stacked into the slots 41c respectively.
As a result, two individual wires 42A, 42B are fit in the core 41A as shown in Fig. 10(b), wherein the straight portion 44a of the individual wires is stored in the slots 41c so that 4 wires are stacked in the radial direction in a state insulated against the core 41A by the insulator 65. Then, the core 41A is rounded to butt its end surfaces each other and is welded to connect them, obtaining a cylindrical core 41, only part of it being shown in Fig. 10(c). Rounding the core 41A makes the shape of slots 41c substantially rectangular in cross section and causes the opening 41e to be smaller than the length of the straight portion 44a in the direction of the slots width. Finally, the stator winding group is completed by connecting the end portions of each individual wire based on the known delta (Δ) and star (Y) connection.

According to the method, as the slot portion of the belt-like core is spread in advance to improve the insertion efficiency of the individual wires thereto, it is possible to eliminate the damage of the individual wires when they are inserted to the slots, and to keep the thickness of the insulating materials located in the slots smaller to obtain the extremely high lamination factor.

In addition, it is possible, by rounding the.core, to eliminate a gap between the core spread in advance and the electrical conductor and to make closely contact to the insulating materials between them, causing heat generated by the armature windings to efficiently radiate to the periphery of the laminated core via the both sides of the teeth portion.

It is also possible to give the conductors a high electrical insulation capability without giving any damage to the thin insulating coating in the portion forming the flattened surface in cross section of the electrical conductor.

## Claims

1. An ac generator (20) for a vehicle comprising:
a rotor (27) having field windings,
a stator (40) including a stator core (41) arranged to surround the rotor (27) and an electrical conductor (44) wound on the stator core (41), and
a housing (23) supporting the rotor (27) and the stator (40),
wherein the stator core (41) is constituted by laminated core (41A) having a plurality of slots (41c) each extending to an axial direction, the electrical conductor (44) is comprised of a slot-in portion (44a) located in the slots (41c) and a cross-over portion (44b) connecting each of the slot-in portions (44a) at the shaft end side of the stator (40), and
the conductor (44) of the slot-in portion (44a) located in the slots (41c) is substantially rectangular in its cross-sectional profile and the conductor (44) of the cross-over portion (44b) is substantially circular in its cross-sectional profile,
wherein at least a longer side portion of the conductor (44) of the slot-in portion (44a) located in the slot (41c) has an insulation coating (45) of which the thickness is smaller than that of insulation coating (45) in the cross-over portion, and
**characterized in that** an insulating resin (47) is impregnated in the electrical conductors located in the slot (41c).

2. An ac generator (20) for a vehicle of claim 1, wherein a shorter side of the conductor is in the radial direction of the generator (20) and a longer side of the conductor is in the circumferential direction of the generator (20).

3. An ac generator (20) for a vehicle of claim 1, wherein a shorter side of the conductor is in the circumferential direction of the generator (20) and a longer side of the conductor is in the radial direction of the generator (20).

4. An ac generator (20) for a vehicle of claim 2, wherein the conductor (44) of the slot-in portion (44a) located in the slots (41c) is closely disposed on a line to the radial direction.

5. An ac generator (20) for a vehicle of claim 2, wherein the conductor (44) of the slot-in portion (44a) located in the slots (41c) is closely disposed plural lines to the radial direction.

## Patentansprüche

1. Wechselstromgenerator (20) für ein Fahrzeug aufweisend:
einen Rotor (27) mit Feldwicklungen,
einen Stator (40) mit einem Statorkern (41), der so angeordnet ist, dass er den Rotor (27) umgibt, und einem elektrischen Leiter (44), der an dem Statorkern (41) gewickelt ist, und
ein Gehäuse (23), das den Rotor (27) und den Stator (40) lagert,
wobei der Statorkern (41) durch einen laminierten Kern (41A) gebildet ist, der eine Vielzahl an Schlitzen (41c) aufweist, die sich jeweils zu einer Axialrichtung erstrecken, wobei der elektrische Leiter (44) einen Einsteckabschnitt (44a), der in den Schlitzen (41c) angeordnet ist, und einen Übergangsabschnitt (44b) aufweist, der jeden der Einsteckabschnitte (44a) an der Wellenendseite des Stators (40) verbindet, und
der Leiter (44) des Einsteckabschnitts (44a), der in den Schlitzen (41c) angeordnet ist, in seinem Querschnittsprofil im Wesentlichen rechteckig ist und der Leiter (44) des Übergangsabschnitts (44b) in seinem Querschnittsprofil im Wesentlichen kreisförmig ist,
wobei zumindest ein längerer Seitenabschnitt des Leiters (44) des Einsteckabschnitts (44a), der in dem Schlitz (41c) angeordnet ist, eine Isolierbeschichtung (45) aufweist, deren Dicke geringer ist als die einer Isolierbeschichtung (45) in dem Übergangsabschnitt, und
**dadurch gekennzeichnet, dass** ein isolierendes Harz (47) in den elektrischen Leitern, die in dem Schlitz (41) angeordnet sind, imprägniert ist.

2. Wechselstromgenerator (20) für ein Fahrzeug nach Anspruch 1, wobei eine kürzere Seite des Leiters in der Radialrichtung des Generators (20) liegt und eine längere Seite des Leiters in der Umfangsrichtung des Generators (20) liegt.

3. Wechselstromgenerator (20) für ein Fahrzeug nach Anspruch 1, wobei eine kürzere Seite des Leiters in der Umfangsrichtung des Generators (20) liegt und eine längere Seite des Leiters in der Radialrichtung des Generators (20) liegt.

4. Wechselstromgenerator (20) für ein Fahrzeug nach Anspruch 2, wobei der Leiter (44) des Einsteckabschnitts (44a), der in den Schlitzen (41c) angeordneten ist, nahe an einer Linie zu der Radialrichtung angeordnet ist.

5. Wechselstromgenerator (20) für ein Fahrzeug nach Anspruch 2, wobei der Leiter (44) des Einsteckabschnitts (44a), der in den Schlitzen (41c) angeordneten ist, nahe an mehreren Linien zu der Radialrichtung angeordnet ist.

## Revendications

1. Générateur de CA (20) pour un véhicule, comprenant :
un rotor (27) présentant des enroulements de champ,
un stator (40) incluant un noyau de stator (41) agencé pour entourer le rotor (27), et un conducteur électrique (44) enroulé sur le noyau de stator (41), et
un boîtier (23) supportant le rotor (27) et le stator (40),
dans lequel le noyau de stator (41) est constitué d'un noyau stratifié (41A) présentant une pluralité de fentes (41c) s'étendant chacune dans une direction axiale, le conducteur électrique (44) est composé d'une partie d'enfichage (44a) située dans les fentes (41c) et d'une partie de recouvrement (44b) connectant chacune des parties d'enfichage (44a) au niveau du côté d'extrémité d'arbre du stator (40), et
le conducteur (44) de la partie d'enfichage (44a) située dans les fentes (41c) est sensiblement rectangulaire dans son profil en coupe transversale, et le conducteur (44) de la partie de recouvrement (44b) est sensiblement circulaire dans son profil en coupe transversale,
dans lequel au moins une partie latérale plus longue du conducteur (44) de la partie d'enfichage (44a) située dans la fente (41c) présente un revêtement isolant (45) dont l'épaisseur est inférieure à celle d'un revêtement isolant (45) dans la partie de recouvrement, et
**caractérisé en ce qu'**une résine isolante (47) est imprégnée dans les conducteurs électriques situés dans la fente (41c).

2. Générateur de CA (20) pour un véhicule selon la revendication 1, dans lequel un côté plus court du conducteur est dans la direction radiale du générateur (20), et un côté plus long du conducteur est dans la direction circonférentielle du générateur (20).

3. Générateur de CA (20) pour un véhicule selon la revendication 1, dans lequel un côté plus court du conducteur est dans la direction circonférentielle du générateur (20), et un côté plus long du conducteur est dans la direction radiale du générateur (20).

4. Générateur de CA (20) pour un véhicule selon la revendication 2, dans lequel le conducteur (44) de la partie d'enfichage (44a) située dans les fentes (41c) est disposé étroitement sur une ligne dans la direction radiale.

5. Générateur de CA (20) pour un véhicule selon la revendication 2, dans lequel le conducteur (44) de la partie d'enfichage (44a) située dans les fentes (41c) est disposé étroitement sur plusieurs lignes dans la direction radiale.
